# EUROPEAN PATENT APPLICATION

(11) **EP 3 782 850 A1**
(43) Date of publication of application: **24.02.2021**
(21) Application number: 19192380.4
(22) Date of filing: 19.08.2019
(51) Int. Cl.: B60L 53/30

(54) **KIT FOR ASSEMBLING AN ELECTRIC VEHICLE CHARGING STATION AND USE THEREOF**

(71) Applicant: Fricke, Volker, 71155 Altdorf (DE)
(72) Inventor: Fricke, Volker, 71155 Altdorf (DE)
(74) Representative: Meyer zu Bexten, Elmar

(57) **Abstract**

**Problem**

Conventional charging stations, especially for residential wall mounting, are inflexible, typically being manufactured and fitted for only one purpose. Oftentimes, these known devices are also fixed in terms of charging power, supporting either of 3.7 kWh, 7.8 kW, 11 kW, or 22 kW. Further, state-of-the-art apparatus are hardly upgradeable to support additional functions like consumption metering. Finally, generic chargers tend to be dependent on their manufacturer, so customer-specific requirements cannot be catered for.

Hence, the invention aims to develop a cost-effective and modularly expandable wall-mountable charging station that grows with customer requirements.

**Solution**

Kit for assembling an electric vehicle charging station (10)
characterized in
a preferably wall-mountable housing having, for example, a top hat rail and fittings, a power connector (2), such as IEC 62196 Type 2, integrated with or cable-connected to the housing,
a control contactor (3) for switching the power connector (2),
electric vehicle supply equipment (4) for controlling the contactor (3),
a cable socket for power supply (14) to the connector (2) via the contactor (3), and residual current protection (6), preferably for alternating and direct current.

## Description

### Technical Field

The invention relates to the product and process as per the preamble of the independent claims.

### Background Art

Widespread adoption of plug-in electric vehicles (PEVs) requires adequate home charging infrastructure. Such infrastructure has been proposed, for instance, in NPL1.

PTL1 discloses a kit for assembling a residential electric vehicle charging station.

### Summary of invention

The invention provides a PEV charging station for residential and semi-public premises.

### Technical Problem

Conventional charging stations, especially for residential wall mounting, are inflexible, typically being manufactured and fitted for only one purpose. Oftentimes, these known devices are also fixed in terms of charging power, supporting either of 3.7 kWh, 7.8 kW, 11 kW, or 22 kW. Further, state-of-the-art apparatus are hardly upgradeable to support additional functions like consumption metering. Finally, generic chargers tend to be dependent on their manufacturer, so customer-specific requirements cannot be catered for.

Hence, the invention aims to develop a cost-effective and modularly expandable wall-mountable charging station that grows with customer requirements.

### Solution to Problem

The problem is solved as per the characterizing part of the independent claims.

### Advantageous effect of invention

Customers are equipped for the future of electric mobility and can charge their electric cars simply, safely, and cost-effectively. Thanks to the ability to upgrade hardware components and software capabilities, customer retention is improved, and periodic returns are achieved through a pay-per-use model.

### Brief description of drawings

Figure 1 gives an overview of a charging station.
Figure 2 is a schematic of the station and cloud.
Figure 3 provides a system overview.
Figure 4 is a wiring scheme of a basic charging station.
Figure 5 is a first sub-assembly A of the station.
Figure 6 is a second sub-assembly B of the station.
Figure 7 shows the interfaces of a connectivity module.
Figure 8 illustrates local static load management.
Figure 9 illustrates remote load management.

### Description of embodiments

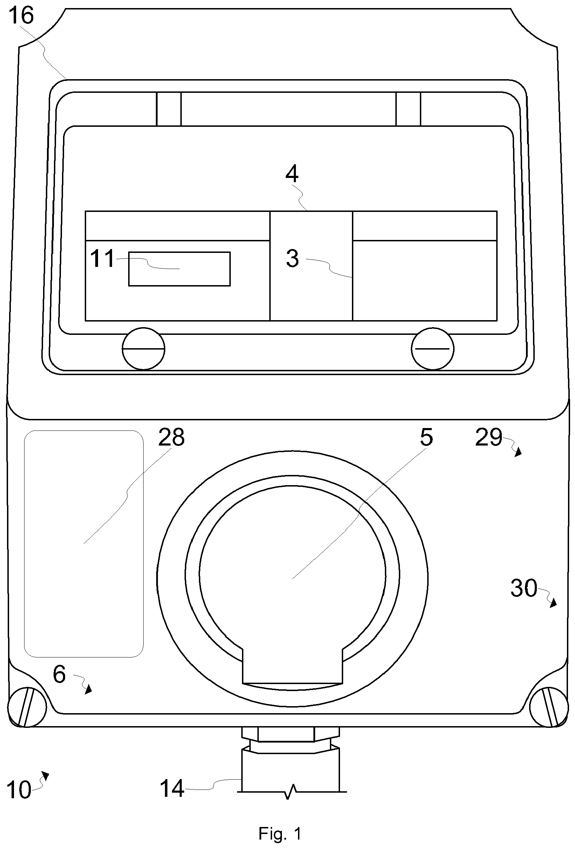

Figure 1 shows a charging station (10), highlighting its key components and potential enhancements to be added by an electrician or electrical engineering specialist. As may be gathered from the drawing, it is possible for customers to expand their charging station (10) in house. The options available include the following.

Customers may share the station (10) with fellow PEV drivers by means of a service package. By scanning a quick response (QR) or other barcode displayed on an adhesive label (28) on the housing (1), any vehicle owner may charge and pay at whatever charging station (10) they choose. Customers determine the hours of operation and prices. Thanks to such service, every customer's charging station (10) is further registered in different directories.

If they so wish, customers are free to add their own custom logo (29).

Thanks to a networking module, it is possible to link the charging station (10) to the cloud (17), exploring a wide range of additional functions via an "app" as an affordable software extension. By updating the software, the charging station (10) will always remain up to date.

Using basic hardware, maximum charging power of the charging station (10) amounts to 22 kW. In addition, it is possible to set up a 43 kW configuration by selecting certain components and adapting the wiring in accordance with safety requirements.

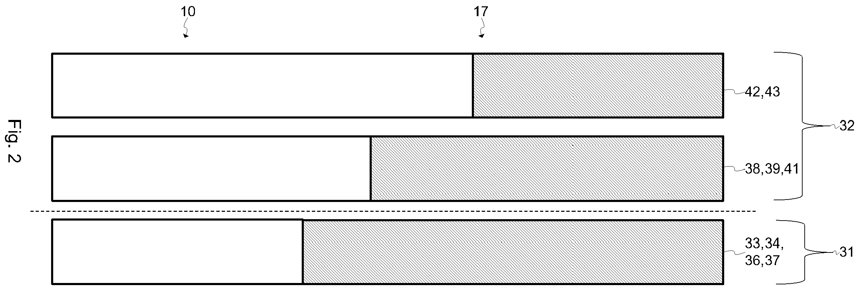

As illustrated in Figure 2, the assembly may be operated as a stand-alone charging station (10) without networking as well as interconnected with the cloud (17). Thanks to such connectivity, a variety of functions can be implemented both externally and locally using on-site facilities, such as load management (40), photovoltaic (PV) systems, or home automation.

This is achieved by means of a connectivity module (16) installed or retrofitted in the charging station (10). This module establishes the connection both with the cloud (17), with further charging stations of the same make installed on site, or with other domestic installations such as the PV system.

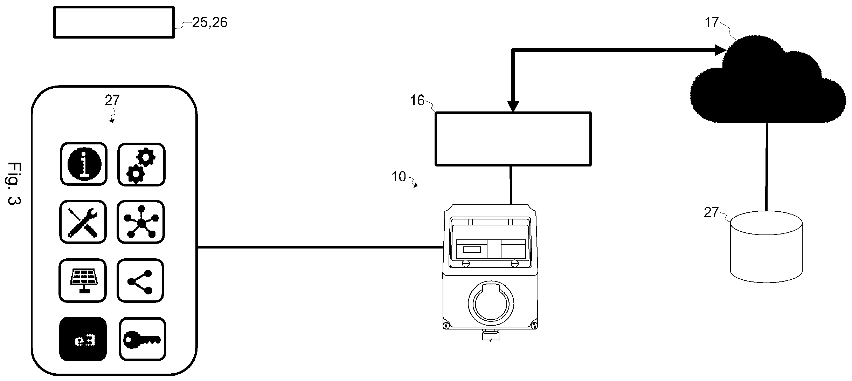

Figure 3 shows the charging station (10) connected to the cloud (17). Via their smartphone (26) or web browser (25), users may install additional apps (27) and thus upgrade to new functions.

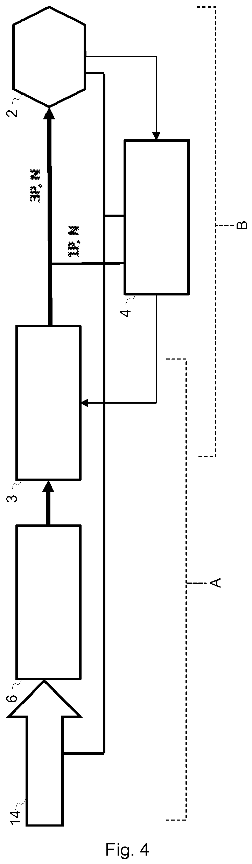

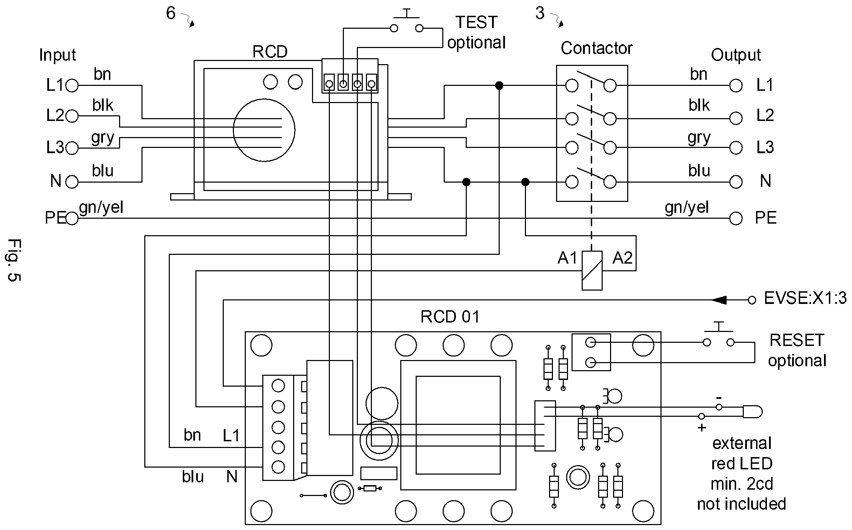

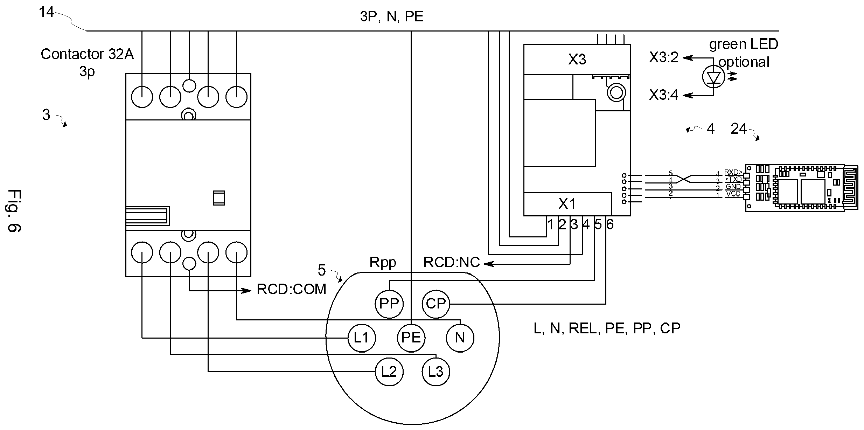

Figure 4, Figure 5, and Figure 6 show the following basic components included in the kit: a preferably wall-mountable housing (1) having, for example, a top hat rail and fittings; a power connector (2), such as IEC 62196 Type 2, integrated with or cable-connected to the housing (1); a control contactor (3) for switching the power connector (2); an electric vehicle supply (14) equipment (EVSE 4) or other charging controller (4) for controlling the contactor (3); a cable socket (5) for power supply (14) to the connector (2) via the contactor (3); and residual current protection (6), preferably for both alternating (AC) and direct current (DC). An optional Bluetooth module (24) may serve to control the equipment (4) via their browser (25) or mobile device.

For reasons of comfort, customers wish to charge their electric cars directly via an integrated power connector (2). In this case, the housing (1) does not require any socket (5), the connector (2) instead being enclosed with the kit by means of a pre-assembled charging cable of the desired length and charging amperage. Here, winding the external charging cable on a cable bracket with a corresponding coupling holder is recommended. Certain customers prefer a spiral cable to prevent it from touching the floor and becoming dirty. As an optional extension, such cable can likewise be purchased and connected by a qualified electrician.

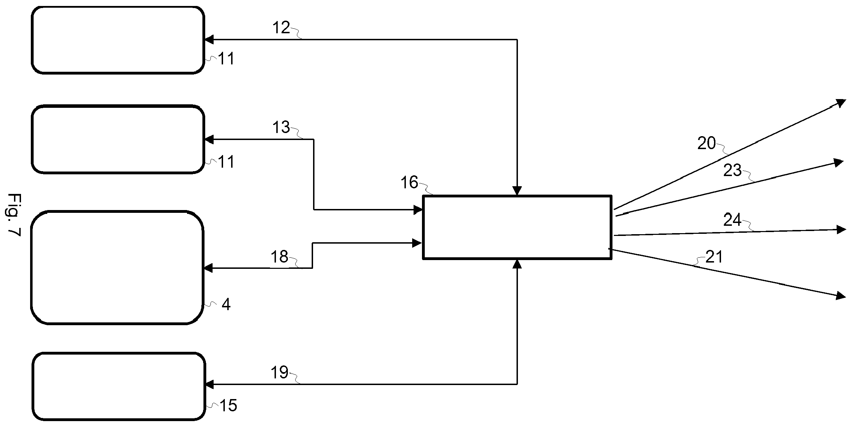

Figure 7 illustrates the connectivity options available. These include a preferably calibrated electric meter (11) having an EN 62053-31 SO interface (12), electronic domestic supply (14) meter (*elektronischer Haushaltszähler*, eHz) interface (13), or RS-485 (18) interface. A radio-frequency identification (RFID) reader (15) may be provided and monitored via universal serial bus (USB 19) by the connectivity module (16). Said module is in turn connected to the EVSE (4) through the RS-485 interface (18) and communicates by means of a wireless local area network (WLAN 20), Bluetooth (21), Z-WAVE (22), or - preferably via the bus (19) - standard Ethernet (23).

Local functions of the charging station (10) include adjustment of the nominal current by app, static or dynamic load management (40), logging and display of charging cycles in what may be called a "charging log", access control via RFID card, PV system, or further smart-home integration.

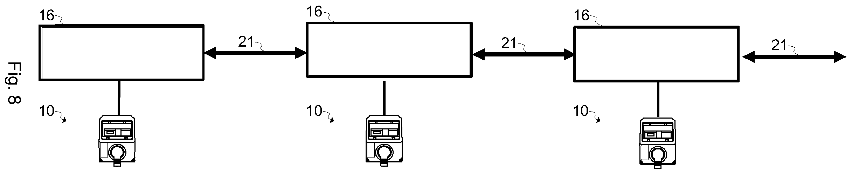

The use case of local static load management (40) is depicted in Figure 8 where several charging stations share a common mains connection. In order not to overburden the connection, it is essential that all charging stations combined do not exceed the permissible maximum amperage.

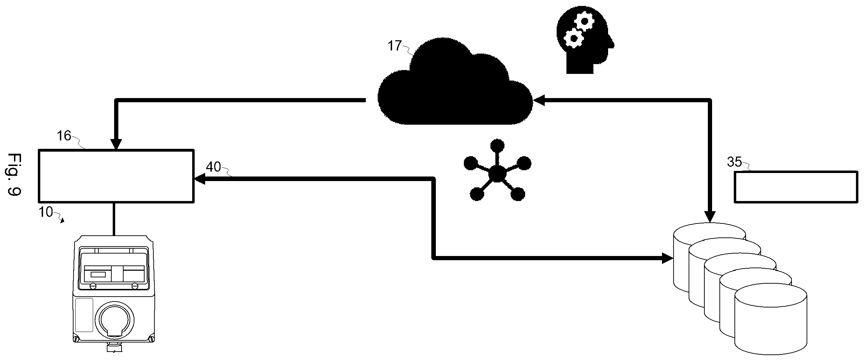

Correspondingly, the use case of load management (40) by the grid operator (35) is elucidated in Figure 9. To this end, a software component is installed on the charging station (10) allowing the operator (35) to influence the charging procedure in line with customers' specifications and preferences.

### Industrial applicability

The invention is applicable, among others, throughout the automotive and smart home industries.

### Reference signs list

- 1: Wall-mountable housing
- 2: Power connector
- 3: Control contactor
- 4: Electric vehicle supply equipment (EVSE)
- 5: Cable socket
- 6: Residual current protection
- 10: Charging station
- 11: Electric meter
- 12: EN 62053-31 S0 interface
- 13: Electronic domestic supply meter (eHz) interface
- 14: Power supply
- 15: Radio-frequency identification (RFID) reader
- 16: Connectivity module
- 17: Cloud
- 18: RS-485 interface
- 19: Universal serial bus (USB)
- 20: Wireless local area network (WLAN)
- 21: Bluetooth
- 22: Z-WAVE
- 23: Ethernet
- 24: Bluetooth module
- 25: Web browser
- 26: Smartphone
- 27: Apps
- 28: Adhesive label
- 29: Custom logo
- 30: UV-proof stickers
- 31: Stand-alone operation
- 32: Networked operation
- 33: Registration
- 34: Reporting
- 35: Grid operator
- 36: Annual revenue report
- 37: Online payment
- 38: Access management
- 39: Remote control
- 40: Load management
- 41: Chronological logs
- 42: Billing by consumption
- 43: Consumption logs

### Citation list

The following documents are cited hereinbefore.

### Patent literature

PTL1: JP 2016143893 A (PANASONIC IP MAN CORP) 08.08.2016

### Non-patent literature

NPL1: LOPEZ-BEHAR, Diana, et al. Charging infrastructure for electric vehicles in Multi-Unit Residential Buildings: Mapping feedbacks and policy recommendations. Energy policy. 2019, vol.126, no.444, p.451.

## Claims

1. Kit for assembling an electric vehicle charging station (10)
**characterized in**
a preferably wall-mountable housing (1) having, for example, a top hat rail and fittings,
a power connector (2), such as IEC 62196 Type 2, integrated with or cable-connected to the housing (1),
a control contactor (3) for switching the power connector (2),
electric vehicle supply equipment (4) for controlling the contactor (3),
a cable socket (5) for power supply (14) to the connector (2) via the contactor (3), and
residual current protection (6), preferably for alternating and direct current.

2. Kit as per Claim 1
comprising
a keylock for controlling access to the supply (14).

3. Kit as per Claim 1 or Claim 2
comprising
a preferably calibrated electric meter (11), for example, having an EN 62053-31 SO (12) or electronic domestic supply meter (13) interface, for metering the supply (14).

4. Kit as per Claim 3
comprising
a radio-frequency identification reader (15) for controlling access to the supply (14) and
a connectivity module (16) for monitoring the reader (15) and connecting to a cloud (17).

5. Kit as per Claim 4
comprising
an RS-485 interface (18) connecting the connectivity module (16) and preferably meter (11) to the equipment (4).

6. Kit as per Claim 4 or Claim 5
comprising
a universal serial bus (19) connecting the reader (15) to the connectivity module (16).

7. Kit as per Claim 6
wherein the connectivity module (16) is configured to communicate through a wireless local area network (20), Bluetooth (21), Z-WAVE (22), or Ethernet (23), preferably via the bus (19).

8. Kit as per any of Claim 4 through Claim 7
comprising
a Bluetooth module (24) for controlling the equipment (4) by means of apps (27), for example, in a Web browser (25) or on a mobile device such as a smartphone (26).

9. Kit as per Claim 8
comprising
a preferably adhesive label (28) displaying a barcode, such as a quick response code, and pricing information.

10. Kit as per Claim 8 or Claim 9
wherein the housing (1) bears a preferably custom logo (29).

11. Kit as per Claim 8, Claim 9, or Claim 10,
wherein the housing (1) bears individual, preferably UV-proof stickers (30).

12. Use of a kit as per any of Claim 8 through Claim 11
**characterized in**
assembling the station (10) for stand-alone operation (31) and
extending the station (10) as needed, such as by adding the reader (15), Bluetooth module (24), or connectivity module (16) for networked operation (32).

13. Use as per Claim 12
comprising, during stand-alone operation (31),
registering (33) the station (10),
reporting (34) by a grid operator (35), such as concerning annual revenue (36), and
online payment (37) of the operator (35) in the cloud (17).

14. Use as per Claim 13
comprising, during networked operation (32),
access management (38),
remote control (39) over the station (10) by the operator (35), such as for load management (40), and
providing chronological logs (41) to the operator (35).

15. Use as per Claim 14
comprising, by means of the meter (11),
billing by consumption (42) and
providing consumption logs (43) to the operator (35).
